Europäisches Patentamt

European Patent Office

Office européen des brevets

(11) Numéro de publication: **0 364 371**
A1

## DEMANDE DE BREVET EUROPEEN

(21) Numéro de dépôt: 89420342.1

(22) Date de dépôt: **13.09.89**

(51) Int. Cl.5: **H02J 7/10 , H02J 9/06**

(30) Priorité: 13.09.88 FR 8812288

(43) Date de publication de la demande:
18.04.90 Bulletin 90/16

(84) Etats contractants désignés:
AT BE CH DE ES GB GR IT LI LU NL SE

(71) Demandeur: LUMINOX S.A.
3 rue Chapsal
F-63200 Riom(FR)

(72) Inventeur: Martinie, Dominique
7 rue des Galoubies
F-63400 Chamalieres(FR)

(74) Mandataire: Dupuis, François
Cabinet Charras, 3 Place de l'Hôtel-de-Ville,
BP 203
F-42005 St. Etienne Cédex 1(FR)

(54) Dispositif de contrôle et de charge d'une batterie d'accumulateurs notamment.

(57) Le dispositif est remarquable en ce que le circuit intégré comprend un compteur (1) qui agit sur une unité centrale de commande (2) asservie par une horloge (3), un circuit d'acquisition de données (4) qui contrôle le secteur, un circuit de télécommande (5) pour piloter les différentes fonctions, un circuit d'acquisition d'informations (6) notamment sur les valeurs des courants et la tension de la batterie, un circuit de commande de signalisation (7) et un circuit (8) apte à générer les impulsions de commande du système de charge.

EP 0 364 371 A1

Xerox Copy Centre

## Dispositif de contrôle et de charge d'une batterie d'accumulateurs notamment.

L'invention trouve une application particulièrement avantageuse pour les blocs autonomes d'éclairage de sécurité.

L'invention se rattache au secteur technique de l'éclairage.

Il est notoirement connu d'utiliser notamment dans les lieux publics, des blocs autonomes d'éclairage de sécurité pour signaler par exemple les issues de secours, sorties et autres même en cas de panne de courant du secteur. Généralement, la plupart de ces blocs comprennent pour l'essentiel :

- une batterie d'accumulateurs apte à assurer une autonomie de fonctionnement pendant plusieurs heures ;
- un dispositif de limitation de décharge apte à assurer la mise automatique à l'état de repos en fin de décharge des accumulateurs ;
- un dispositif apte à assurer le passage de l'état de veille à l'état de fonctionnement ;
- un dispositif apte à assurer, à l'état de veille, la charge puis le maintien de la charge de la batterie d'accumulateurs ;
- un dispositif de télécommande apte à assurer, à distance, la mise à l'état de repos ou à l'état de fonctionnement de l'ensemble du bloc.

Généralement, l'ensemble de ces dispositifs et éléments est assujetti à une électronique analogique simple. La charge des accumulateurs s'opère en courant continu constant. La fiabilité de ces blocs d'éclairage dépend directement du bon fonctionnement des dispositifs susindiqués, plus particulièrement de l'état des accumulateurs.

En effet, un problème important résulte d'une mauvaise utilisation des accumulateurs qui vieillissent prématurément compte tenu des conditions de charge et d'entretien qui ne sont pas respectées. Normalement, il est nécessaire de décharger régulièrement les accumulateurs et de vérifier leur autonomie. Cependant, un tel entretien préventif n'est pratiquement jamais réalisé car, d'une part, il nécessite un temps relativement important et, d'autre part, il ne peut pas être assuré pendant les heures de présence du personnel, dans les locaux où sont installés les blocs d'éclairage.

Pour résoudre ce problème, d'une manière sûre et efficace, le bloc autonome d'éclairage, tel que décrit dans ses principaux composants, comprend, selon l'invention, un dispositif apte à assurer automatiquement le contrôle de la batterie d'accumulateurs assujettie à un système de charge à courant pulsé et à deux régimes.

On réalise donc l'asservissement d'une technique de charge à courant pulsé à deux régimes aux résultats d'un contrôle volontaire d'autonomie d'une batterie ou aux résultats d'une décharge de celle-ci. Les fonctions chargeur et contrôle de la batterie sont combinées.

Il est ainsi possible de procéder automatiquement à l'entretien et à la vérification des accumulateurs, pendant les heures de fermeture des locaux. Une signalisation est susceptible d'indiquer, si le bloc est ou non en état de fonctionnement.

Pour résoudre le problème posé du contrôle automatique, le dispositif est établi à partir d'un circuit intégré conformé pour assurer une décharge du bloc avec retour automatique à l'état de veille, au bout d'un temps déterminé de fonctionnement ou bien dès l'intervention du dispositif de limitation de décharge.

Le circuit intégré est conformé pour contrôler le passage de l'état de veille à l'état de fonctionnement, l'autonomie des accumulateurs et l'état des lampes qui assurent l'éclairage de secours, le résultat dudit contrôle étant mémorisé et signalé par des moyens d'indication visuelle.

Le circuit intégré est conformé de sorte qu'à la fin du cycle de contrôle, la batterie d'accumulateur est soumise à une valeur de courant de charge dite "forcée".

Pour résoudre le problème de l'automatisme du contrôle et de l'entretien, le dispositif de télécommande auquel est assujetti le bloc, est apte à assurer les fonctions :
- réinitialisation,
- démarrage du cycle de contrôle,
- arrêt du cycle de contrôle,
- démarrage du régime de charge "forcé",
- arrêt du régime de charge "forcé",
- signalisation.

Pour résoudre le problème posé de recharger correctement la batterie d'accumulateurs, le système de charge à courant pulsé et à deux régimes et dont les impulsions de commande sont générées par le circuit intégré, est conformé pour assurer la charge complète des accumulateurs en 24 heures, les deux régimes étant fixées par deux impulsions de fréquences différentes.

Il apparait donc que le dispositif de contrôle et de charge selon l'invention, permet, à la demande de l'utilisateur, qui en donnera l'ordre à l'aide du dispositif de télécommande, d'effectuer une vérification d'autonomie de la batterie. L'autonomie contrôlée a préalablement été fixé par l'utilisateur, pour un courant minimum de décharge également fixé. Il en résulte que le dispositif ne contrôle pas la charge de la batterie, mais une aptitude de celle ci à restituer une certaine énergie et à assurer une certaine fonction.

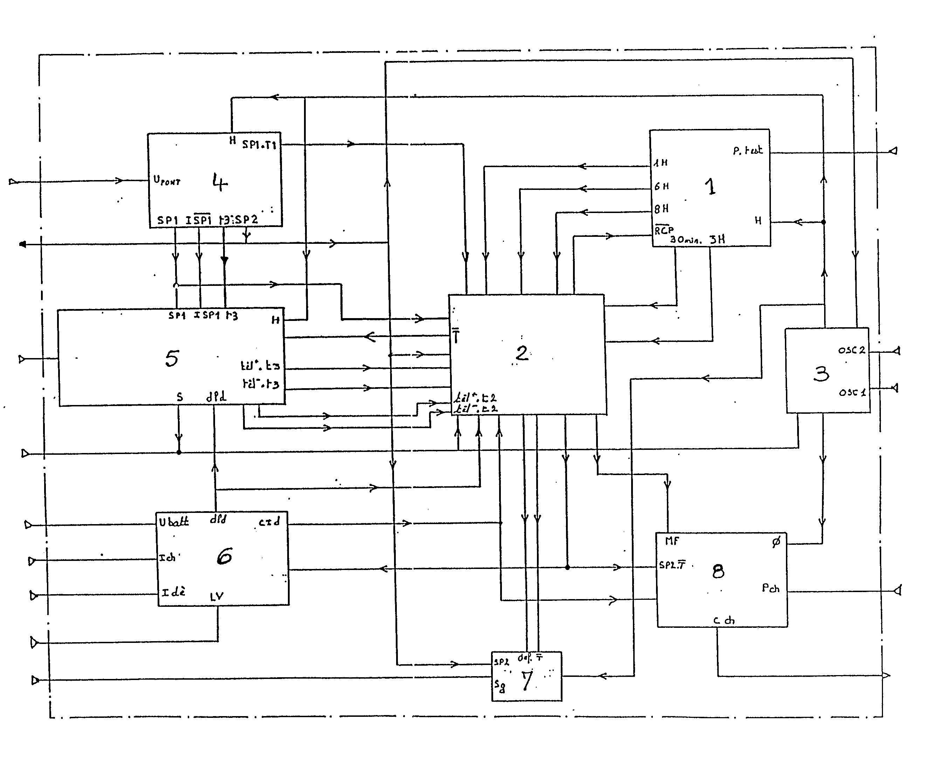

L'invention est exposée ci-après plus en détail à l'aide de la description et du dessin annexé qui montre le schéma synoptique du circuit intégré.

Le dispositif est établi à partir d'un circuit intégré spécifique qui intègre la commande du dispositif de charge et de contrôle automatique. Ce circuit comprend un compteur (1) qui agit sur une unité centrale de commande (2) asservie par une horloge (3), un circuit d'acquisition de données (4) qui contrôle le secteur, un circuit de télécommande (5) pour piloter les différentes fonctions, un circuit d'acquisition d'informations (6) notamment sur les valeurs des courants et la tension de la batterie, un circuit de commande de signalisation (7) et un circuit (8) apte à générer les impulsions de commande du système de charge.

Selon l'invention, afin de recharger correctement la batterie d'accumulateurs, le circuit de charge est du type à courant pulsé et à deux régimes. Il est conformé pour assurer la charge complète des accumulateurs en 24 heures. Les deux régimes sont fixés par deux impulsions de fréquences différentes, au choix 11Khz et 22 Khz ou 22 Khz et 44 Khz. Dans ces conditions, un régime dit "forcé" fonctionnera pendant un temps déterminé à l'issue duquel on basculera automatiquement sur le régime dit "de maintien".

La valeur, en ampère, du courant de charge "forcé" est très sensiblement égale au dixième de la capacité assignée des accumulateurs, tandis que la valeur du courant de maintien est très sensiblement égale au vingtième.

Le dispositif de contrôle automatique de l'état de charge des accumulateurs, est conformé pour assurer une décharge du bloc d'éclairage avec retour automatique à l'état de veille au bout d'un temps déterminé (une heure ou six heures) ou bien aussitôt l'intervention du dispositif de limitation de décharge.

Il permet pendant cette période de vérifier le passage de l'état de veille à l'état de fonctionnement et l'autonomie de la batterie d'accumulateurs et l'état des lampes qui asurent l'éclairage de secours. Le résultat du contrôle est mémorisé et signalé par une diode luminescente dans les conditions suivantes :
- "diode allumée d'une manière fixe" signifie, par exemple, que le contrôle est en cours ;
- "diode éteinte" signifie, par exemple, que le bloc d'éclairage est conforme ;
- "diode allumée d'une manière clignotante" signifie par exemple que le bloc d'éclairage est défectueux.

A la fin du cycle de contrôle ou d'entretien, le dispositif redémarre en charge "forcée", de façon à ce que, dans un délai de 8 à 12 heures, la batterie d'accumulateurs retrouve son autonomie nominale d'une heure (ou de 6 heures). Ceci permet par exemple à l'utilisateur de démarrer le cycle de contrôle le soir en quittant les locaux et d'avoir, à son retour, toutes les informations sur l'état de son installation de sécurité avec son autonomie nominale.

La commande des diverses fonctions du bloc de sécurité s'opère au moyen du boîtier de télécommande. A cet effet, la réinitialisation est faite en présence du secteur au moyen d'une impulsion de télécommnde négative maintenue 2 à 3 secondes par exemple. Au bout de ce laps de temps, le bloc se retrouve à l'état de veille, le chargeur étant en régime de "maintien".

Le démarrage du cycle de contrôle ou d'entretien se fait en présence du secteur en envoyant une impulsion de télécommande positive maintenue 2 à 3 secondes.

L'arrêt du cycle de contrôle ou d'entretien peut s'effectuer de plusieurs façons :
- soit systématiquement au bout d'une heure (ou de 6 heures) ou après intervention du dispositif de limitation de décharge .
- soit à l'aide d'une simple impulsion de télécommande négative, en présence du secteur.

Le démarrage du régime de charge "forcé" se fait automatiquement, après un cycle de contrôle ou d'entretien et après un fonctionnement (secteur absent) de plus d'une heure (ou de 6 heures) ou après intervention du dispositif de limitation de décharge.

L'arrêt du régime de charge "forcé" se fait après une réinitialisation.

Quant à la signalisation, elle ne peut être faite qu'en présence du secteur pour indiquer soit que le cycle de contrôle est en cours, soit que le bloc est défectueux.

La signalisation "bloc défectueux" étant permanente, elle ne peut être arrêtée qu'à l'aide d'une impulsion positive de télécommande, secteur présent.

Selon l'invention, le circuit intégré spécifique, peut être réalisé dans un technologie d'une manière préférée du type "standard cell". Les avantages ressortent bien de la description, en particulier ou souligne l'augmentation de durée de vie du bloc d'éclairage, avec une fiabilité de fonctionnement accrue.

Comme indiqué, le dispositif ne doit pas être limité à une application aux blocs d'éclairage de sécurité, mais dans tous les cas où un problème de contrôle et de charge de batteries se pose.

## Revendications

-1- Dispositif de contrôle et de charge d'une batterie d'accumulateurs notamment, caractérisé en ce qu'il est établi à partir d'un circuit intégré spécifique apte à assurer automatiquement le contrôle de la batterie d'accumulateurs et en étant apte à générer les impulsions de commande d'un système de charge à courant pulsé et à deux régimes.

-2- Dispositif selon la revendication 1, caractérisé en ce que le circuit intégré est conformé pour assurer une décharge de la batterie avec retour automatique à l'état de veille, au bout d'un temps déterminé de fonctionnement ou bien dès l'intervention du dispositif de limitation de décharge.

-3- Dispositif selon l'une quelconque des revendications 1 et 2 et son application à un bloc autonome d'éclairage de sécurité du type de ceux comprenant une batterie d'accumulateurs, un dispositif de limitation de décharge, un dispositif assurant le passage de l'état de veille à l'état de fonctionnement, un dispositif de charge, un dispositif de télécommande pour la mise à l'état de repos ou à l'état de fonctionnement

-4- Dispositif selon la revendication 3, caractérisé en ce que le circuit intégré est conformé pour contrôler le passage de l'état de veille à l'état de fonctionnement et l'autonomie des accumulateurs, le résultat dudit contrôle étant mémorisé et signalé par des moyens d'indication visuelle.

-5- Dispositif selon l'une quelconque des revendications 1,2 et 4, caractérisé en ce que le circuit intégré est conformé de sorte qu'à la fin du cycle de contrôle, la batterie d'accumulateur est soumise à une valeur de courant de charge dite "forcée".

-6- Dispositif selon la revendication 3, caractérisé en ce que le dispositif de télécommande est apte à assurer les fonctions suivantes, en combinaison avec le circuit intégré :
- réinitialisation,
- démarrage du cycle de contrôle,
- arrêt du cycle de contrôle,
- démarrage du régime de charge "forcé",
- arrêt du régime de charge "forcé",
- signalisation.

-7- Dispositif selon la revendication 1, caractérisé en ce que le système de charge à courant pulsé et à deux régimes, est conformé pour assurer la charge complète des accumulateurs en 24 heures, les deux régimes étant fixés par deux impulsions de fréquences différentes.

-8- Dispositif selon la revendication 1, caractérisé en ce que le circuit intégré comprend un compteur (1) qui agit sur une unité centrale de commande (2) asservie par une horloge (3), un circuit d'acquisition de données (4) qui contrôle le secteur, un circuit de télécommande (5) pour piloter les différentes fonctions, un circuit d'acquisition d'informations (6) notamment sur les valeurs des courants et la tension de la batterie, un circuit de commande de signalisation (7) et un circuit (8) apte à générer les impulsions de commande du système de charge.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | EP-A-0191579 (DUAL-LITE MANUFACTURING)<br>* page 13, ligne 1 - page 43, ligne 5; figures 1-6 * | 1-7 | H02J7/10<br>H02J9/06 |
| A | | 8 | |
| | ---- | | |
| Y | EP-A-0126936 (ALLIED CORP.)<br>* page 14, ligne 5 - page 21, ligne 28; revendication 1; figures 1, 4-7 * | 1-7 | |
| | ---- | | |
| Y | EP-A-0030154 (EMLUX LTD)<br>* page 3, ligne 19 - page 8, ligne 8; figures 1-3 * | 1 | |
| A | | 3-7 | |
| | --- | | |
| Y | US-A-3963976 (W.H.CLARK)<br>* colonne 2, ligne 17 - colonne 2, ligne 60; figures 1-3 * | 1 | |
| | --- | | |
| A | US-A-4591778 (V.S.HOLLAND)<br>* colonne 6, ligne 63 - colonne 14, ligne 52; figures 1, 2, 8 * | 1 | DOMAINES TECHNIQUES RECHERCHES (Int. Cl.5 ) |
| | --- | | |
| A | EP-A-0207054 (MATA F.)<br>* page 4, ligne 23 - page 7, ligne 23; figures 1-2c * | 2,4 | H02J<br>H05B |
| | --- | | |
| A | EP-A-0134410 (HOWMEDICA INTERNATIONAL INC.)<br>* page 6, ligne 11 - page 7, ligne 2; revendication 1; figures 1, 2 * | 2,4 | |
| | ----- | | |

Le présent rapport a été établi pour toutes les revendications

| Lieu de la recherche | Date d'achèvement de la recherche | Examinateur |
|---|---|---|
| LA HAYE | 10 NOVEMBRE 1989 | FOURRICHON P.M.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
                                                  
& : membre de la même famille, document correspondant

EPO FORM 1503 03.82 (P0402)